# EUROPÄISCHE PATENTANMELDUNG

(11) **EP 0 910 201 A2**
(43) Veröffentlichungstag der Anmeldung: **21.04.1999**
(21) Anmeldenummer: 98440201.6
(22) Anmeldetag: 07.09.1998
(51) Int. Cl.: H04M 7/00

(54) **Vorrichtung und Verfahren zum Aufbau einer Gesprächsverbindung**

(30) Priorität: 17.10.1997 DE 19745961
(71) Anmelder: ALCATEL, 75088 Paris (FR)
(72) Erfinder: Sienel, Jürgen, 71229 Leonberg (DE); Kopp, Dieter, 71282 Hemmingen (DE)
(74) Vertreter: Schätzle, Albin, Dipl.-Phys.

(57) **Zusammenfassung**

Gesprächsverbindungen über das Internet (Internet-Telefonie) sind kostengünstiger als über ein öffentliches Fernsprechnetz. Jedoch sind im Internet keine festen Übertragungsraten garantiert, was zu Einbußen bei der Qualität übertragener Sprachsignale führen kann.

Eine Vorrichtung (V) zum Aufbau einer Gesprächsverbindung zwischen zwei Teilnehmerendgeräten (T1, T2) besitzt eine erste Schnittstelle (IF1) zu einem paketvermittelten Datennetz (INET) und Mittel (KOMP, IP) zum Verbindungsaufbau über das paketvermittelte Datennetz (INET) sowie eine zweite Schnittstelle (IF2) zu einem verbindungsorientierten Telekommunikationsnetz (PSTN), in dem ein Übertragungskanal mit vorbestimmter Übertragungsbandbreite einrichtbar ist. Mittels einer Überwachungseinrichtung (MON) ermittelt die Vorrichtung (V) einen aktuellen Datendurchsatz in dem Daten netz (INET). Eine Steuereinrichtung (SW) der Vorrichtung (V) vergleicht den aktuellen Datendurchsatz mit einem vorbestimmten Schwellenwert und steuert den Verbindungsaufbaues in der Weise, daß die Gesprächsverbindung über das Daten netz (INET) aufgebaut wird, wenn der Datendurchsatz oberhalb des Schwellenwertes liegt, und über das Telekommunikationsnetz (PSTN) aufgebaut wird, wenn der Datendurchsatz unterhalb des Schwellenwertes liegt.

## Beschreibung

Die Erfindung betrifft eine Vorrichtung zum Aufbau einer Gesprächsverbindung nach dem Oberbegriff des Anspruchs 1, ein Teilnehmerendgerät mit einer solchen Vorrichtung nach Anspruch 8, eine Telekommunikationsanlage mit einer solchen Vorrichtung nach Anspruch 9 und ein Verfahren zum Aufbauen einer Gesprächsverbindung nach Anspruch 10.

In einem Artikel von Dirk Rausch, "Telefonieren über das Internet", Funkschau 17/95 S.44-47, wird beschrieben, wie ein paketvermitteltes Daten netz, nämlich das Internet, für Telefongespräche und damit zum Aufbau einer Gespächsverbindung zwischen zwei Teilnehmerendgeräten eingesetzt werden kann. Dazu wird Sprache digitalisiert, komprimiert, paketweise über das Internet übertragen und am anderen Ende wieder zusammengesetzt, dekomprimiert und digital-analog gewandelt. Durch diese Art der Telefonie lassen sich in erheblichem Maße Telefongebühren einsparen. Internet-Telefony-Gateways dienen dazu, das Internet mit dem herkömmlichen Telefonnetz zu verbinden, um so ein Telefongespräch zwischen einem Internetteilnehmer und einem Teilnehmer des herkömmlichen Telefonnetzes herzustellen. Telefonie über das Internet besitzt jedoch den Nachteil schwankender Übertragungsqualität, da im Internet keine feste Bitrate zur Datenübertragung garantiert ist. So kann es zu stockender Sprachübertragung, zu Gesprächspausen oder auch zum Gesprächsabbruch wegen Überschreitens eines Zeitlimits kommen.

Der Artikel "Jackpot Least-Cost Routing" von Ulrich Pfaffenberger, abgedruckt in Funkschau 9/97, S.28-34 beschreibt eine Möglichkeit, Telefongebühren bei Gesprächen zu Mobilfunktteilnehmern zu sparen. Hierzu werden sogenannte Anschaltboxen verwendet, die erkennen, ob ein Teilnehmer über ein Mobilfunknetz oder über ein Festnetz erreichbar ist. Bei beiden Netzen handelt es sich um verbindungsorientierte Telekommunikationsnetze. Die Anschaltbox besitzt sowohl zu dem Festnetz als auch zu verschiedenen Mobilfunknetzen einen direkten Anschluß und wählt anhand der Rufnummer des gewünschten Gesprächspartners aus, über welches Netz eine Verbindung hergestellt wird. Dieses als Least-Cost-Routing bezeichnete Verfahren besitzt den Nachteil, daß es nur bei Gesprächen zu Mobilfunkteilnehmem anwendbar ist.

Aufgabe der Erfindung ist es, eine Vorrichtung zum Aufbau einer flexibleren Gesprächsverbindung zwischen Teilnehmerendgeräten zu schaffen, bei der es nicht zu einer wesentlichen Beeinträchtigung der Sprachqualität kommt. Eine weitere Aufgabe der Erfindung ist es, ein Verfahren zum Aufbau einer solchen Gesprächsverbindung anzugeben.

Ein Vorteil der Erfindung ist es, daß bei der momentanen Preispolitik der Netzwerkanbieter eine Kostenerspamis gegenüber Telefongesprächen im herkömmlichen Telefonnetz erreicht wird

Die Erfindung wird hinsichtlich der Vorrichtung gelöst durch die Merkmale des Anspruch 1 und hinsichtlich des Verfahrens durch die Merkmale des Anspruchs 10. Vorteilhafte Ausgestaltungen sind in den abhängigen Ansprüchen angegeben.

Im folgenden wird die Erfindung anhand der Zeichnungen in zwei Ausführungsbeispielen erläutert. Es zeigen:
- Fig. 1: Ein Schaubild zur Verdeutlichung des Einsatzes der erfindungsgemäßen Vorrichtung in einem ersten Ausführungsbeispiel,
- Fig. 2: ein Blockschaltbild der erfindungsgemäßen Vorrichtung und
- Fig. 3: ein zweites Ausführungsbeispiel der Erfindung.

Ein Grundgedanke der Erfindung liegt darin, für eine Gesprächsverbindung bevorzugt ein paketvermitteltes Daten netz, beispielsweise das Internet, zu verwenden, da hierbei geringere Gebühren verrechnet werden. Wenn eine Gesprächsverbindung in dem Datennetz jedoch z.B. aufgrund von Überlastung nicht oder nur mit schlechter Qualität möglich ist, wird die Gesprächsverbindung über ein verbindungsorientiertes Kommunikationsnetz aufgebaut. Zur Bestimmung der erreichbaren Gesprächsqualität in dem Datennetz dient eine Überwachungseinrichtung, die den aktuellen Datendurchsatz über das Datennetz zu dem gewünschten Gesprächspartner ermittelt. Liegt dieser Datendurchsatz unterhalb eines vorbestimmten Schwellenwertes, so wird die Gesprächsverbindung über das Kommunikationsnetz aufgebaut, in welchem ein Übertragungskanal mit vorbestimmter Übertragungsbondbreite garantiert ist. Das Kommunikationsnetz kann beispielsweise ein nach dem ISDN-Standard arbeitendes öffentliches Fernsprechnetz mit einer garantierten Übertragungsrate von 64 kBit/s pro B-Kanal sein. Paketvermittelte Datennetze werden auch als verbindungslose Netze bezeichnet, im Gegensatz zu verbindungsorientierten Netzen wie den herkömmlichen digitalen oder analogen Telefonnetzen.

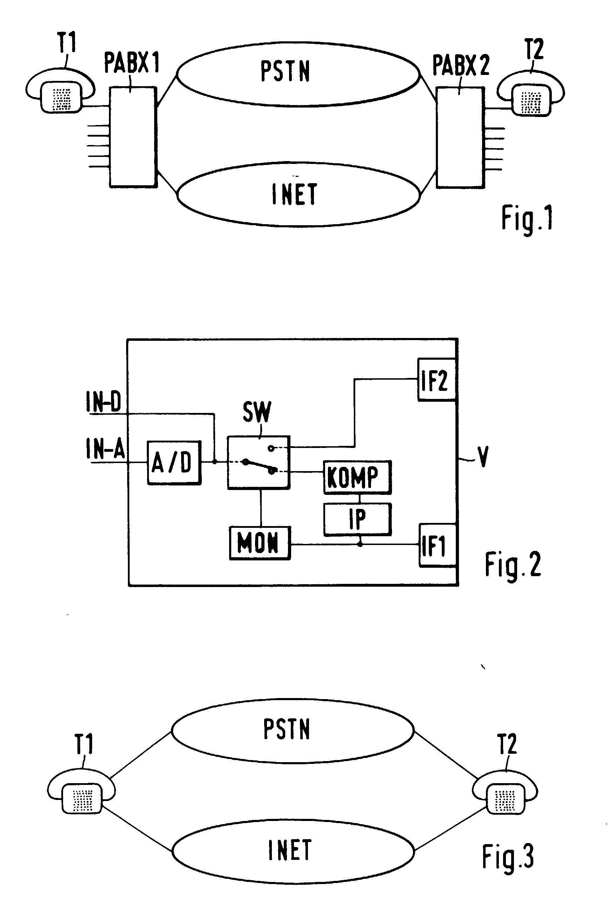

Der Einsatz einer erfindungsgemäßen Vorrichtung zum Aufbau der Gesprächsverbindung bei einem ersten Ausführungsbeispiel ist in Figur 1 gezeigt. Zwei Teilnehmerendgeräte T1 und T2, beispielsweise analoge oder digitale Telefonapparate, sind jeweils über eine Telekommunikationsanlage PABX (PABX: private automatic branch exchange) sowohl mit dem Internet INET als auch mit einem öffentlichen Fernsprechnetz PSTN (PSTN: public switches telephone network) verbunden. Eine Gesprächsverbindung von einem rufenden Teilnehmerendgerät T1 zu einem gerufenen Teilnehmerendgerät T2 kann daher sowohl über das Internet als auch über das öffentliche Fernsprechnetz aufgebaut werden. Im ersten Ausführungsbeispiel ist die erfindungsgemäße Vorrichtung in der ersten Telekommunikationsanlage PABX1 integriert. Telekommunikationsanlagen werden häufig auch als Nebenstellenanlagen bezeichnet.

Das Blockschaltbild in Figur 2 verdeutlicht den Aufbau und die Funktion der erfindungsgemäßen Vorrichtung V. Die Vorrichtung V hat eine erste Schnittstelle IF1 zum Internet und eine zweite Schnittstelle IF2 zu dem öffentlichen Fernsprechnetz. Unter einer Schnittstelle sind Schnittstelleneinrichtungen oder Schnittstellenschaltungen zu verstehen, die mit dem jeweiligen Netz verbunden werden können und eine Anpassung der elektrischen Eigenschaften an die Erfordernisse des jeweiligen Netzes oder auch eine Anpassung der vor und hinter der jeweiligen Schnittstellen verwendeten Protokolle vornehmen. Mit der ersten Schnittstelle IF1 ist die Überwachungseinrichtung MON verbunden. Diese ermittelt den Datendurchsatz im Internet, beispielsweise indem sie an das gerufenen Teilnehmerendgerät oder an eine andere Stelle im Netz Testsignale verschiedener Länge sendet und die Antwortzeiten der Gegenstelle bestimmt, ähnlich wie dies bei dem als PING bekannten Verfahren im Internet üblich ist.

Die Vorrichtung V verfügt in dem ersten Ausführungsbeispiel über zwei Eingänge IN-A und IN-D für den Anschluß des Teilnehmerendgerätes. Der erste Eingang IN-D wird zum Anschluß digitaler Telefonapparate verwendet, der zweite IN-A zum Anschluß analoger. Dem zweiten Eingang ist daher ein Analog/Digital-Wandler nachgeschaltet, der aus einem analogen Eingangssignal ein Digitalsignal erzeugt, beispielsweise ein PCM-Signal (PCM: Pulse Code Modulation) der in "Digitales Vermittlungssystem EWDS", Telekom Unterrichtsblätter Jg. 46 2/1993 S.48-51, beschriebenen Art.

Der aktuelle Datendurchsatz, der von der Überwachungseinrichtung ermittelt wurde, wird in einer Steuerungseinrichtung SW mit einem vorbestimmten Schwellenwert verglichen. Liegt der Datendurchsatz oberhalb des Schwellenwertes, so initiiert die Steuerungseinrichtung den Verbindungsaufbau über das Internet.

Wie der Verbindungsaufbau über Internet abläuft, ist beispielsweise in dem eingangs zitierten Artikel von Dirk Reusch detailiert beschrieben. Aus der Telefonnummer des gerufenen Teilnehmerendgerätes wird eine IP-Adresse ermittelt, beispielsweise durch eine Anfrage bei einem zentralen Server. Die digitalen Sprachsignale werden von einer Komprimiereinrichtung KOMP komprimiert und einer Paketiereinrichtung IP zugeleitet. Diese verpackt die Sprachdaten in gemäß dem Internet-Protokoll (IP) strukturierte Pakete, fügt die IP-Adressen von Absender und Empfänger hinzu und schickt die Pakete ins Internet. Dort werden sie paketvermittelt an den Empfänger, beispielsweise ein Gateway oder eine IP-fähige Telekommunkationsanlage, an die das gerufene Teilnehmerendgerät angeschlossen ist, zugestellt.

Falls das Internet überlastet ist, ist keine störungsfreie Gesprächsverbindung möglich. Der Datendurchsatz liegt dann unterhalb des vorbestimmten Schwellenwertes. In diesem Fall initiiert die Steuerungseinrichtung den Aufbau der Gesprächsverbindung über das öffentliche Fernsprechnetz, wo stets eine störungsfreie Gesprächsverbindung bei allerdings höheren Gebühren möglich ist. Die Steuerungseinrichtung hat also logisch die Funktion eines Umschalters zwischen dem Internet und dem öffentlichen Fernsprechnetz.

Als vorteilhaft erweist es sich, den Datendurchsatz im Internet während eines Gespräches periodisch oder auch fortwährend durch die Überwachungseinrichtung zu überwachen. Sinkt der Datendurchsatz unter den vorbestimmten Schwellenwert, was zu verminderter Übertragungsqualität führt, so wird parallel zu einer über das Internet bestehenden Verbindung eine zweite Gesprächsverbindung über das öffentliche Fernsprechnetz aufgebaut. Nachdem diese parallele Verbindung steht, wird das bestehende Gespräch von der Steuerungseinrichtung auf das öffentliche Fernsprechnetz umgeschaltet.

Vor dem Umschalten erfolgt zwischen den beiden Endgeräten vorteilhafterweise eine Signalisierung, mit Hilfe derer ein Absprache über die Umschaltung zwischen den Endgeräten stattfindet, z.B. eine-Absprache über das Vornehmen der Umschaltung und deren Zeitpunkt.

Auch für den Fall, daß die Gesprächsverbindung über das öffentliche Fernsprechnetz aufgebaut wurde, weil der Datendurchsatz unterhalb des Schwellenwertes liegt, ist eine fortgesetzte Überwachung des aktuellen Datendurchsatzes sinnvoll, um auf das kostengünstigere Internet auszuweichen, wenn der Datendurchsatz wieder oberhalb des Schwellenwertes liegt.

Um zu vermeiden, daß während eines Gespräches zu häufig umgeschaltet wird, bestehen folgende Möglichkeiten, die auch kombinbiert werden können: Ein Umschalten erfolgt nur dann, wenn der aktualisierte Datendurchsatz den Schwellenwert um mindestens einen vorbestimmten Differenwert unter- beziehungsweise überschreitet oder der aktualisierte Datendurchsatz wird bei der Messung mit einer vorbestimmten Zeitkonstante, d.h. jeweils über eine vorbestimmte Zeitspanne, integriert. Ein zu häufiges Umschalten könnte zu einer insgesamt höheren Gebühr führen, da für jeden neuen Verbindungsaufbau in dem öffentlichen Fernsprechnetz Gebühren fällig werden.

In dem Ausführungsbeispiel ist der Schwellenwert auf 6,5 kBit/s festgelegt und der Differenzwert, um den der aktualisierte Datendurchsatz den Schwellenwert mindestens unterschreiten muß, damit auf das öffentliche Fernsprechnetz umgeschaltet wird, beträgt 0,5 kBit/s. Diese Wahl ermöglicht, daß für die Sprachkodierung ein Standardkompressionsverfahren (ITU-T G723.1) eingesetzt werden kann, das Datenströme mit 5,3 oder 6,3 kBit/s produziert. Der Schwellenwert kann auch auf 5,5 kBit/s festgelegt werden. Dann kann der standardisierte Sprachcodec für 5,3 kBit/s verwendet werden.

Erfindungsgemäß lassen sich auch Konferenzschaltungen von einem rufenden Teilnehmerendgerät zu mehreren gerufenen Teilnehmerendgeräten je nach Datenduchsatz im Internet entweder über das öffentliche Fernsprechnetz oder über das Internet aufbauen. Dabei kann auch gleichzeitig ein Teil der gerufenen Teilnehmerendgeräten über Gesprächsverbindungen im Internet erreicht werden und der restliche Teil über Gesprächsverbindungen im öffentlichen Telefonnetz. Somit ergibt sich der Vorteil, daß für eine Konferenzschalltung eine Brücke zwischen den beiden Netzen geschaffen wird, wodurch gerufene Teilnehmer einbezogen werden können, die entweder nur über das Internet oder nur über das öffentliche Fernsprechnetz erreichbar sind. Gleiches ist auch für eine Rufweiterschaltung von einem Netz in das andere möglich.

In Figur 3 ist ein zweites Ausführungsbeispiel der Erfindung gezeigt. Die Figur zeigt zwei jeweils mit dem öffentlichen Femsprechnetz PSTN und dem Internet INET verbundene Teilnehmerendgeräte T1, T2. In die Teilnehmerendgeräte T1, T2 ist jeweils eine erfindungsgemäße Vorrichtung integriert. Je nach aktuellem Datendurchsatz im Internet wird also eine Gesprächsverbindung von einem rufenden Teilnehmerendgerät T1 zu einem gerufenen Teilnehmerendgerät T2 nach dem vorstehend erläuterten Verfahren entweder über das Internet oder aber über das öffentliche Fernsprechnetz aufgebaut.

Bei dem zweiten Teilnehmerendgerät T2 muß es sich nicht wie in der Figur 3 gezeigt um ein zu T1 gleichartiges Gerät handeln. Vielmehr ist auch eine Kombination der in Figur 1 und 3 gezeigten Vorrichtungen möglich, d.h. ein Teilnehmerendgerät der im zweiten Ausführungsbeispiel gezeiten Art ruft ein an eine Telekommunikationsanlage des ersten Ausführungsbeispieles angeschlossenes Teilnehmerendgerät. Selbstverständlich können auch Teilnehmerendgeräte, die nur über ein Netz erreichbar sind, entweder über Internet oder über das öffentliche Fernsprechnetz, gerufen werden. Die Möglichkeit des Umschaltens entfällt in diesem Fall.

Die beiden Schnittstellen IF1, IF2 zu den beiden Netzen PSTN, INET können auch identisch ausgeführt sein, beispielsweise als S₀-Schnittstelle von ISDN. Wenn ein Verbindungswunsch zu einem gerufenen Teilnehmerendgerät vorliegt, wird über die erste Schnittstelle IF mittels des ersten B-Kanals eine Verbindung zu einem Internetanbieter hergestellt, der beispielsweise zum Ortstarif erreichbar ist. Über den Internetanbieter wird nun versucht, eine Gesprächsverbindung im Internet aufzubauen. Wenn der Datendurchsatz im Internet unterhalb des Schwellenwertes liegt, wird die Gesprächsverbindung parallel über den zweiten B-Kanal von ISDN, der mit der zweiten Schnittstelle IF2 verbunden ist, im öffentlichen Fernsprechnetz aufgebaut.

Eine vorteilhafte Weiterbildung besteht darin, mittels der Steuerungseinrichtung in Abhängigkeit weiterer Kriterien eine Gesprächsverbindung stets über das öffentliche Fernsprechnetz aufzubauen. Solche weiteren Kriterien können z.B. sein, daß das gerufene Teilnehmerendgerät nicht über Internet erreichbar ist. Dieses Kriterium kann z.B. an der Rufnummer und anhand von einer in einem Speicher der Steuerungseinrichtung gespeicherten Ausschlußliste ermittelt werden. Ein anderes Kriterium kann die Rufnummer selbst sein, anhand der erkannt werden kann, ob sich der gerufene Teilnehmer im selben oder einem benachbarten Ortsnetz befindet. In diesem Fall wäre eine Gesprächsverbindung über das öffentliche Fernsprechnetz meist günstiger als über einen Internetanbieter. Noch ein anderes Kriterium kann die Uhrzeit sein, zu der ein Anruf getätigt werden soll. Unter Zuhilfenahme einer Gebührentabelle kann sich ergeben, daß es zu bestimmten Uhrzeiten ebenfalls kostengünstiger ist, eine Gesprächsverbindung nicht über Internet sondern über das öffentliche Fernsprechnetz aufzubauen.

Bei dieser Weiterbildung wird von der Steuereinrichtung geprüft, ob eine vorbestimmte Bedingung an ein oder mehrere weitere Kriterien erfüllt ist. Bei Erfüllung der Bedingung wird der Verbindungsaufbau dann stets über das öffentliche Fernsprechnetz gesteuert. Die vorbestimmte Bedingung könnte für einen Teilnehmer aus dem Ortsnetz 0711 mit dem Nachbarnetz 07152 z.B. lauten: "Wenn [die Vorwahl der Rufnummer 0711 ODER 07152 lautet] ODER wenn [die Vorwahl mit 07 beginnt UND die aktuelle Uhrzeit zwischen 18.00 und 9.00 liegt] dann baue die Verbindung stets über das öffentliche Fernsprechnetz auf" (eckige Klammern dienen zum logischen Gliedern der Bedingung).

Ein anderes paketvermitteltes Datennetz, bei dem die Erfindung vorteilhaft eingesetzt werden kann, ist ein Intranet, wie es große Gesellschaften firmenintern betreiben.

## Patentansprüche

1. Vorrichtung (V) zum Aufbau einer Gesprächsverbindung zwischen mindestens zwei Teilnehmerendgeräten (T1, T2), die eine erste Schnittstelle (IF1) zu einem paketvermittelten Datennetz (INET) und Mittel (IP, KOMP) zum Verbindungsaufbau über das paketvermittelte Datennetz (INET) aufweist,
**gekennzeichnet durch**
- eine zweite Schnittstelle (IF2) zu einem verbindungsorientierten Telekommunikationsnetz (PSTN), in dem ein Übertragungskanal mit festgelegter Übertragungsbandbreite einrichtbar ist,
- eine Überwachungseinrichtung (MON) zum Ermitteln eines aktuellen Datendurchsatzes in dem Datennetz (INET),
- eine Steuereinrichtung (SW) zum Vergleichen des aktuellen Datendurchsatzes mit einem festgelegten Schwellenwert und zum Steuern des Verbindungsaufbaues in der Weise, daß die Gesprächsverbindung über das Datennetz (INET) aufgebaut wird, wenn der Datendurchsatz oberhalb des Schwellenwertes liegt, und über das Telekommunikationsnetz (PSTN) aufgebaut wird, wenn der Datendurchsatz unterhalb des Schwellenwertes liegt.

2. Vorrichtung nach Anspruch 1, bei der die Überwachungseinrichtung (MON) wiederholt einen aktualisierten Datendurchsatz in dem Datennetz ermittelt und die Steuereinrichtung (SW) den Verbindungsaufbau während eines Gespräches in der Weise steuert, daß eine bestehende, über das Datennetz (INET) aufgebaute Gesprächsverbindung über das Telekommunikationsnetz (PSTN) neu aufgebaut wird, wenn der aktualisierte Datendurchsatz unterhalb des Schwellenwertes liegt.

3. Vorrichtung nach Anspruch 1 oder 2, bei der die Überwachungseinrichtung (MON) wiederholt einen aktualisierten Datendurchsatz in dem Daten netz (INET) ermittelt und die Steuereinrichtung (SW) den Verbindungsaufbau während eines Gespräches in der Weise steuert, daß eine bestehende, über das Telekommunikationsnetz (PSTN) aufgebaute Gesprächsverbindung über das Datennetz (INET) neu aufgebaut wird, wenn der aktualisierte Datendurchsatz oberhalb des Schwellenwertes liegt.

4. Vorrichtung nach Anspruch 2, bei dem die Steuereinrichtung (SW) den Verbindungsaufbau in der Weise steuert, daß ein neuer Verbindungsaufbau über das Telekommunikationsnetz (PSTN) erst dann erfolgt, wenn der aktualisierte Datendurchsatz den Schwellenwert um mindestens einen vorbestimmten Differenzwert unterschreitet.

5. Vorrichtung nach Anspruch 3, bei dem die Steuereinrichtung (SW) den Verbindungsaufbau in der Weise steuert, daß ein neuer Verbindungsaufbau über das Datennetz (INET) erst dann erfolgt, wenn der aktualisierte Datendurchsatz den Schwellenwert um mindestens einen vorbestimmten Differenzwert überschreitet.

6. Vorrichtung nach Anspruch 2 oder 3, bei dem der aktualisierte Datendurchsatz vor dem Vergleichen mit dem Schwellenwert mit einer vorbestimmten Zeitkonstante integriert wird.

7. Vorrichtung nach Anspruch 1, bei der die Steuerungseinrichtung (SW) den Verbindungsaufbau in Abhängigkeit mindestens eines weiteren Kriteriums in der Weise steuert, daß eine Gesprächsverbindung bei Erfüllung einer vorbestimmten Bedingung an das mindestens eine weitere Kriterium stets über das Kommunikationsnetz (PSTN) aufgebaut wird.

8. Teilnehmerendgerät (T1, T2), bei dem zwei Kanäle zu einem digitalen verbindungsorientierten Kommunikationsnetz (PSTN) parallel einrichtbar sind, dadurch gekennzeichnet, daß es eine Vorrichtung (V) nach Anspruch 1 enthält, daß die erste (IF1) und die zweite Schnittstelle (IF2) jeweils mit einem der beiden Kanäle verbunden sind und daß über den mit der ersten Schnittstelle (IF1) verbundenen Kanal eine Verbindung zu einem Anbieter des paketvermittelten Datennetzes einrichtbar ist.

9. Telekommunikationsanlage (PABX1, PABX2) mit einer Vielzahl von Anschlüssen für Teilnehmerendgeräte, gekennzeichnet durch eine Vorrichtung nach Anspruch 1.

10. Verfahren zum Aufbau einer Gesprächsverbindung von einem rufenden Teilnehmerendgerät (T1), das an eine Vorrichtung (V) zum Aufbau der Gesprächsverbindung angeschlossen ist, zu mindestens einem gerufenen Teilnehmerendgerät (T2), mit folgenden Schritten:
- Verbinden des rufenden Teilnehmerendgerätes (T1) mit einem paketvermittelten Datennetz (INET) über eine erste Schnittstelle (IF1) der Vorrichtung (V),
- Verbinden des rufenden Teilnehmerendgerätes (T1) mit einem verbindungsorientierten Telekommunikationsnetz (PSTN), in dem ein Übertragungskanal mit vorbestimmter Übertragungsbandbreite einrichtbar ist, über eine zweite Schnittstelle (IF2) der Vorrichtung (V),
- Ermitteln eines aktuellen Datendurchsatzes in dem paketvermittelten Datennetz (INET),
- Vergleichen des aktuellen Datendurchsatzes mit einem vorbestimmten Schwellenwert und
- Steuern des Verbindungsaufbaues in der Art, daß die Gesprächsverbindung über das Datennetz (INET) aufgebaut wird, wenn der Datendurchsatz oberhalb des Schwellenwertes liegt, und über das verbindungsorientierte Telekommunikationsnetz (PSTN) aufgebaut wird, wenn der Datendurchsatz unterhalb des Schwellenwertes liegt.
